# DEMANDE DE BREVET EUROPEEN

(11) **EP 1 797 750 A1**
(43) Date de publication de la demande: **20.06.2007**
(21) Numéro de dépôt: 06125986.7
(22) Date de dépôt: 13.12.2006
(51) Int. Cl.: A01B 3/46

(54) **Charrue réversible portée avec roue de transport latérale**

(30) Priorité: 16.12.2005 FR 0553906
(71) Demandeur: Kuhn-Huard S.A., 44142 Chateaubriant Cedex (FR)
(72) Inventeur: Aoustin, Gérard, 44110, Saint Aubin des Chateaux (FR)
(74) Mandataire: Andres, Jean-Claude

(57) **Abrégé**

La présente invention concerne une charrue (1) réversible portée comprenant un avant-train (2) et un arrière-train (3), l'arrière-train (3) comportant un bâti (6) équipé d'au moins deux corps de labour (8), d'une roue de régulation (10) et d'une roue de transport (11), ladite roue de régulation (10) est disposée à l'arrière du bâti (6).

Ladite charrue (1) est remarquable en ce que ladite roue de transport (11) est disposée latéralement sur ledit bâti (6) de la charrue (1).

Cette implantation latérale permet à la roue de transport (11) de ne pas déborder de l'encombrement global de la charrue (1). De plus, le centre de gravité de la charrue (1) est plus proche du système d'attelage (4) du tracteur (5).

## Description

La présente invention se rapporte au domaine technique général du machinisme agricole. Elle concerne plus particulièrement une charrue réversible portée comprenant un avant-train et un arrière-train, l'arrière-train comportant un bâti équipé d'au moins deux corps de labour, d'une roue de régulation et d'une roue de transport, ladite roue de régulation est disposée à l'arrière du bâti.

D'une manière connue en soi, les charrues sont équipées d'au moins une roue de jauge ou de régulation. Cette roue assure le réglage de la profondeur de travail de la charrue en complément du système d'attelage du tracteur. De manière connue en soi, les charrues sont portées au cours des déplacements dans les champs et sont selon leur poids portées ou traînées lors des déplacements sur route. Pour des charrues présentant plus de quatre corps, la charrue repose partiellement lors des déplacements sur une roue. Il est courant d'utiliser la roue de régulation comme roue de transport, on parle alors couramment de roue combinée. Une telle roue combinée doit alors remplir la fonction de contrôle de la profondeur de travail des corps de labour lors du travail et la fonction d'appui au sol de la charrue lors du transport. Différentes articulations disposées dans des plans différents sont nécessaires pour réaliser la liaison de la roue combinée à l'arrière-train de la charrue. La liaison est donc compliquée ce qui rend le réglage de la profondeur de travail de la roue combinée plutôt délicat. Pour le transport, il faut pivoter la roue combinée d'un quart de tour et bloquer sa rotation autour de l'articulation correspondante. Par ailleurs, la configuration d'une telle roue combinée résulte d'un compromis entre la configuration de travail et de transport. La roue combinée n'est donc pas adaptée pour des déplacements à grande vitesse.

Sur d'autres charrues connues, les deux fonctions ont été dissociées et ces charrues sont équipées de deux roues. Une roue spécifique de régulation qui est très bien adaptée pour le contrôle de la profondeur de travail des corps de charrue en travail et d'une roue spécifique de transport spécialement adaptée pour le transport.

Une telle machine est décrite dans le prospectus "**VARI LEGENDER**" daté du 11/2003 de la Société **KUHN.** Cette charrue portée comporte notamment une roue de régulation implantée à l'arrière du bâti pour régler la profondeur de travail en relation avec le système d'attelage du tracteur. La charrue comporte aussi une roue de transport qui supporte une partie du poids de la charrue lors du transport. Ladite roue de transport est montée à l'arrière du bâti, au voisinage de ladite roue de régulation. De part l'implantation de la roue de régulation et de la roue de transport à l'extrémité arrière du bâti, il y a une accumulation d'éléments à l'arrière de la charrue. Cette importante accumulation d'éléments réduit fortement l'espace disponible pour chaque roue. Les interventions de réparation et de remplacement d'éléments de roues ou d'articulations de la charrue sont difficiles et longues.

Par ailleurs dans une configuration de travail, la roue de transport, montée à l'arrière, déborde par rapport à l'encombrement en longueur et en largeur du bâti. Sa position débordante gène le travail de la charrue lorsque l'on est en présence de clôtures ou de haies. La roue de transport limite ainsi la surface labourée et par suite la production du champ. Cet inconvénient se présente à chaque fois que la charrue se trouve proche d'une bordure de champ qu'elle ne peut pas franchir. On ne peut donc pas labourer au plus près des limites du champ lorsque ce dernier est bordé par une clôture, un fossé ou un champ voisin comportant encore des cultures. Les pertes de surface cultivée sont particulièrement sensibles dans le cas de champs de faibles dimensions.

D'autres charrues sont équipées d'une roue de transport qui est démontée lors du travail et posée au bord du champ. Il faut donc remonter cette roue de transport avant de mettre la charrue dans sa position de transport pour changer de champ.

La présente invention a pour but de remédier aux inconvénients précités et de proposer une charrue portée telle que décrite dans l'introduction avec une roue de transport qui permet un labour au plus près des limites d'un champ. La roue de transport ne doit pas limiter l'activité de la charrue dans la configuration de travail.

A cet effet, une importante caractéristique de l'invention consiste en ce que ladite roue de transport est disposée latéralement sur ledit bâti de la charrue. Par son implantation latérale, ladite roue de transport ne déborde plus au-delà de l'encombrement global de la charrue. On peut ainsi effectuer un labour au plus près des limites et par conséquent cultiver au mieux toute la surface du champ.

Un autre avantage de l'implantation latérale de la roue de transport est le rapprochement du centre de gravité de l'ensemble de la charrue du système d'attelage du tracteur. Le couple de cabrage de l'ensemble de la charrue est ainsi réduit, ce qui est particulièrement intéressant lors des manoeuvres dans les fourrières.

Une telle implantation latérale apporte encore un avantage supplémentaire dans les manoeuvres en transport puisque le rayon de balayage de la roue de transport est moins important. Les manoeuvres sur les chemins et l'entrée dans un champ avec un accès étroit sont facilitées.

Cette roue de transport implantée latéralement est appropriée pour des charrues portées lourdes et autorise des vitesses de transport relativement élevées.

Selon une autre caractéristique de l'invention, ladite roue de transport est disposée dans le plan horizontal lors du travail. Le remisage de la roue de transport dans le plan horizontal permet de rester dans l'encombrement du bâti et ainsi de passer au-dessous de certains obstacles lors du premier passage de la charrue. Ceci permet également un labour au plus près des limites du champ.

D'autres caractéristiques et avantages ressortiront des revendications et de la description ci-après d'un exemple de réalisation non limitatif de l'invention avec référence aux dessins annexés dans lesquels :
- la **figure 1** représente une vue latérale d'une charrue conforme à l'invention dans la configuration de travail attelée à un tracteur,
- la **figure 2** représente une vue latérale de la charrue dans la configuration de transport,
- la **figure 3** représente une vue de dessus de la charrue dans la configuration de travail,
- la **figure 4** représente une vue de côté, à une plus grande échelle, d'une roue de transport dans la configuration de transport,
- la **figure 5** représente une vue de dessus, à une plus grande échelle, d'une roue de transport dans la configuration de travail.

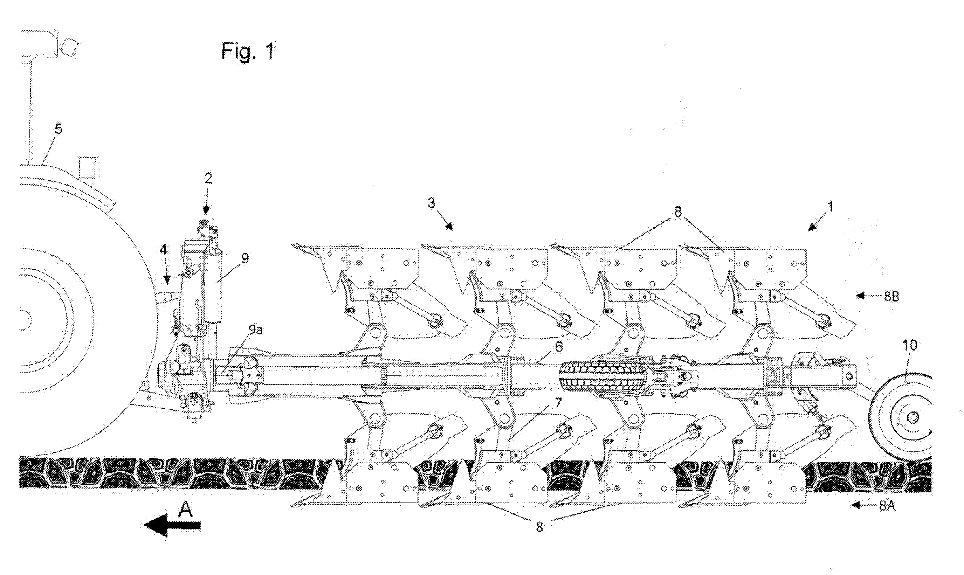

Telle qu'elle est représentée sur la figure 1, la machine selon l'invention est une charrue réversible portée (1). D'une manière connue de l'homme de l'art, ladite charrue (1) se compose d'un avant-train (2) et d'un arrière-train (3). L'avant-train (2) est la partie avant de la charrue (1) qui est reliée au système d'attelage 3 points (4) d'un tracteur (5). L'avant-train (2) est encore destiné à porter l'arrière-train (3) de la charrue (1). L'arrière-train (3) est globalement composé d'un bâti (6), d'au moins un age (7) et d'au moins un corps de labour (8). Le bâti (6) est constitué d'une poutre de section carrée ou rectangulaire, qui est renforcée localement pour résister aux efforts de torsion lors du travail et aux efforts de flexion pendant le transport. Cette structure du bâti (6), lui permet notamment de supporter les ages (7) avec les corps de labour (8).

Ladite charrue (1) de l'invention est destinée à être reliée à un tracteur (5) qui sert à animer la charrue (1) et à la déplacer dans une direction d'avance indiquée par la flèche (A) au travail comme au transport par l'intermédiaire du système d'attelage 3 points (4). Dans la suite de la description, les notions "avant" et "arrière", "devant" et "derrière" sont définies par rapport au sens d'avance (A) et les notions "droite" et "gauche" sont définies en regardant la charrue (1) de l'arrière dans ledit sens d'avance (A).

La charrue réversible (1) comporte deux groupes (8A ; 8B) de corps de labour (8). Un premier groupe de corps de labour (8A) étant destiné au labour à droite et un deuxième groupe (8B) destiné au labour à gauche. La charrue (1) peut occuper alternativement au moins une des positions de travail grâce à un dispositif de retournement (9) qui permet de pivoter l'arrière-train (3) d'un demi-tour autour d'un axe de retournement (9a). Le bâti (6) est relié à l'avant-train (2) au moyen de l'axe de retournement (9a) qui est aussi appelé la fusée. On comprendra que ces opérations de retournement sont effectuées à l'occasion d'une inversion de la direction de progression du tracteur par rapport à la parcelle à labourer.

Dans l'exemple de réalisation de la figure 1, la charrue (1) est représentée dans une configuration de travail. Le groupe (8A) est en train de retourner la terre. La charrue (1) comporte à l'extrémité arrière dudit bâti (6) une roue de régulation (10) pour contrôler la profondeur de travail des corps de labour (8) en complément du système d'attelage (4) du tracteur (5). Ainsi la profondeur de travail est identique sur toute la longueur de la charrue (1). La roue de régulation (10) roule sur le sol non labouré pour maintenir une certaine profondeur de labour. La roue de régulation (10) bascule autour d'un axe sensiblement horizontal et perpendiculaire à la direction d'avance (A) lors du retournement pour pouvoir régler la profondeur de travail dans l'autre position de travail. Dans un autre exemple de réalisation non représenté, la charrue (1) peut être équipée de deux roues de régulation (10). Une première roue de régulation est active lorsque la charrue (1) est dans sa position de labour à droite (groupe (8A)) et une deuxième roue de régulation est active lors du labour à gauche (groupe (8B)).

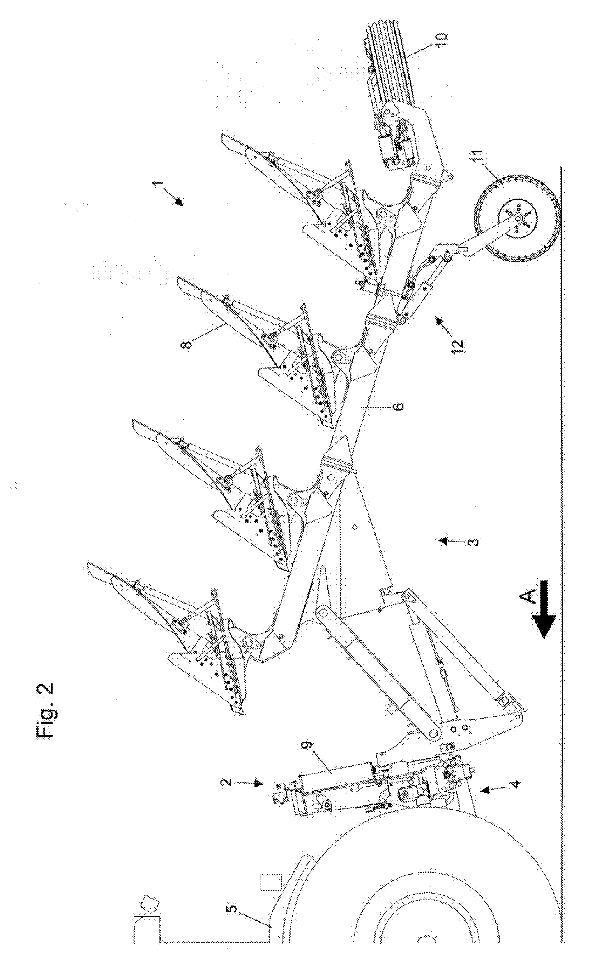

La charrue (1), représentée sur les figures, présente quatre corps de labour (8). La charrue (1) est portée lors des déplacements dans les champs et à cause de son poids, elle est traînée lors des déplacements sur routes. De ce fait, la charrue (1) est équipée d'une roue de transport (11). Lorsque le dispositif de retournement (9) pivote uniquement d'un quart de tour, farrière-train (2) de la charrue (1) passe d'une des positions de travail à la position de transport. Ainsi, le bâti (6) de la charrue (1) repose au moins partiellement sur le sol au moyen de ladite roue de transport (11). La configuration de transport de la charrue (1) est représentée à la figure 2. Pendant le transport, le poids de la charrue (1) est réparti sur les bras de relevage inférieur du système d'attelage 3 points (4) et sur la roue de transport (11). La barre supérieure du système d'attelage 3 points (4) est désaccouplée pour que la charrue (1) munie d'une roue de transport (11) puisse être traînée derrière le tracteur (5) en étant uniquement attachée par les bielles inférieures du système d'attelage (4). Il serait également possible d'utiliser une barre supérieure sous la forme d'un vérin hydraulique. Pour la position de transport, les deux chambres du vérin communiquent de manière à obtenir une liaison flottante.

Selon une caractéristique importante de l'invention, la roue de transport (11) est disposée latéralement sur ledit bâti (6) de la charrue (1). L'implantation en latéral de la roue de transport (11) sur ledit bâti (6), libère de l'espace, à l'arrière, pour la roue de régulation (10). L'accès à la roue de régulation (10) tout comme l'accès à la roue de transport (11) sont ainsi facilités. Chaque roue (10, 11) peut être développée en ne tenant compte que des contraintes propres à ladite roue. On ne tient plus compte de l'encombrement de l'autre roue. La roue de transport (11) implantée latéralement ne gêne, ni ne limite l'espace à l'arrière du bâti (6). Cet espace est entièrement disponible pour la fixation de la roue de régulation (10).

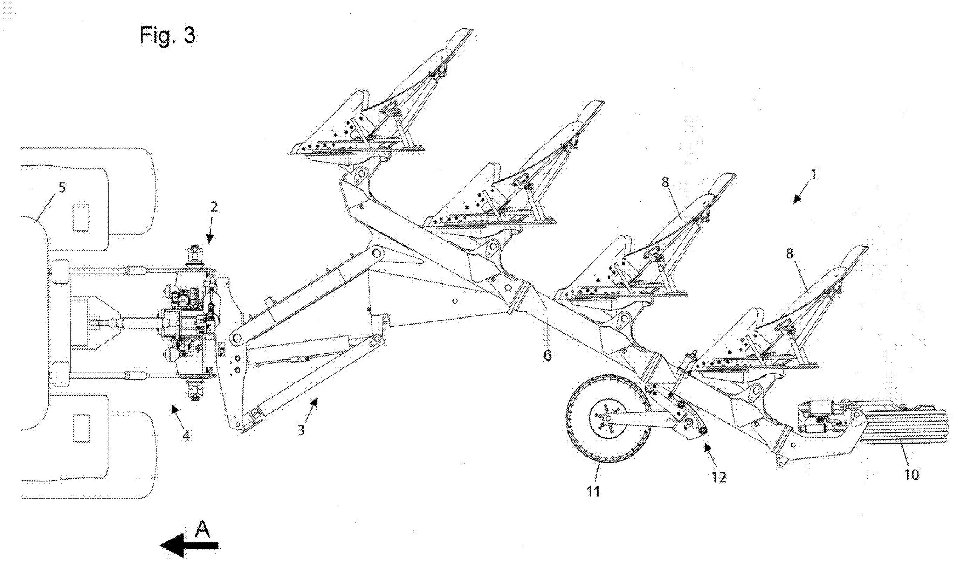

Selon la figure 3 qui représente une vue de dessus de la charrue (1) de l'invention dans une position de travail, on remarque que la roue de transport (11) ne déborde plus au-delà de l'encombrement en longueur du bâti (6). Toute la surface du champ est alors cultivée car le labour peut être effectué au plus près des limites du champ

L'implantation latérale de la roue de transport (11) rapproche également le centre de gravité de l'ensemble de la charrue (1) du système d'attelage (4) du tracteur (5). Le couple de cabrage de la charrue (1) est réduit ce qui facilite notamment les manoeuvres dans les fourrières. Les manoeuvres dans les chemins comme l'entrée dans les champs avec un accès étroit sont aussi plus aisées. En effet, le rayon de balayage de la roue de transport (11) est moins important par son implantation latérale, la roue de transport (11) ne dépasse pas de l'encombrement en longueur de la charrue (1). La manoeuvrabilité de l'ensemble tracteur (5) et charrue (1) est améliorée par l'implantation latérale de la roue de transport (11) car son rayon de balayage est plus court.

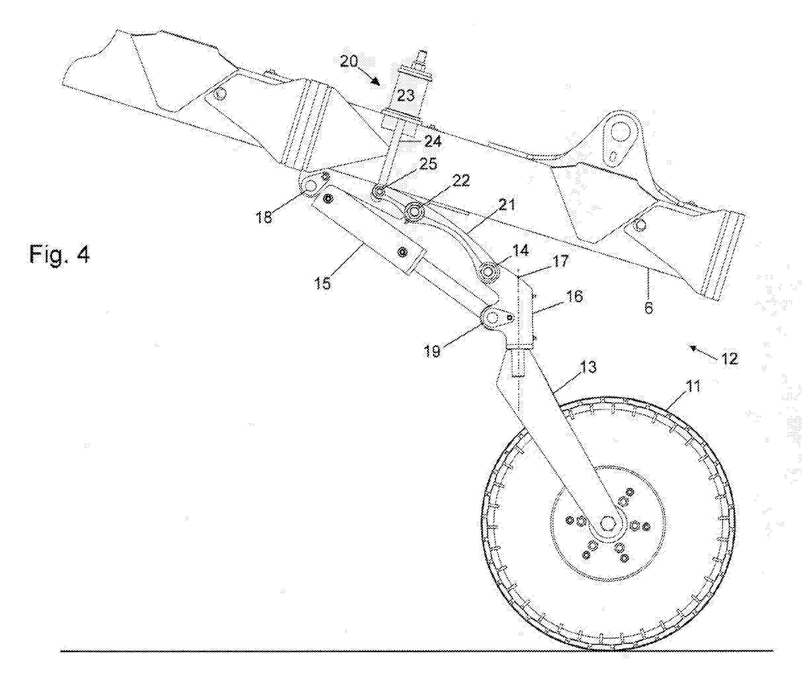

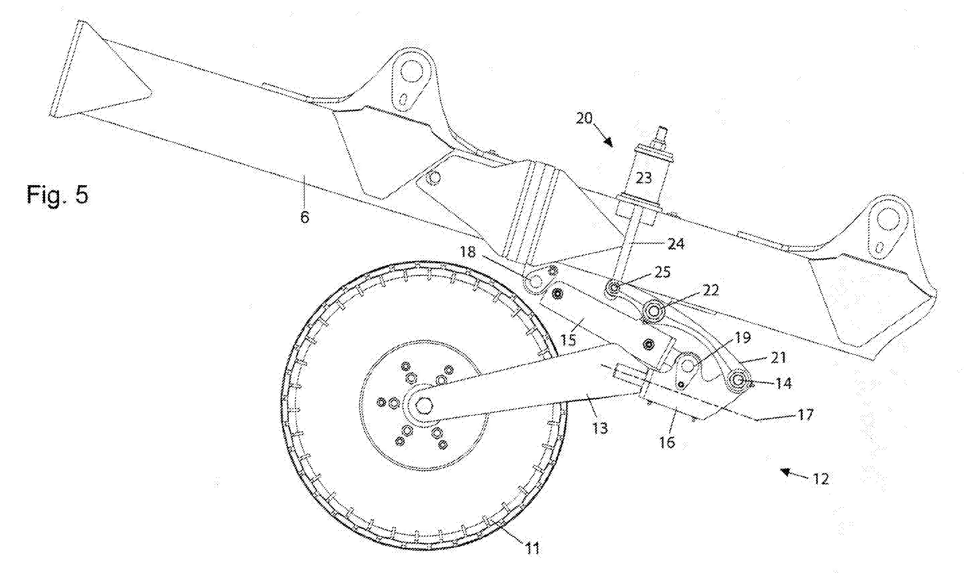

D'après les figures 4 et 5, la roue de transport (11) est liée latéralement au bâti (6) au moyen d'un dispositif de liaison (12). La roue de transport (11) est placée sur le bâti (6) de telle sorte qu'en marche arrière, le centre de gravité de la charrue (1) soit toujours en avant du point d'appui de la roue de transport (11) au sol. La roue de transport (11) est appuyée sur le sol et supporte une partie du poids de la charrue (1) lors du transport alors qu'elle n'est pas utilisée lors du travail. Ainsi, la roue de transport (11) n'est pas au sol lors du passage d'une position de travail à une autre position de travail. La figure 4 représente la roue de transport (11) dans sa configuration active lors du transport et la figure 5 représente la roue de transport (11) dans sa configuration passive lors du travail. Grâce au dispositif de liaison (12), la roue de transport (11) passe de sa position active de transport à sa position passive lors du travail de la charrue (1). A cet effet, la roue de transport (11) est liée par un bras de roue (13) au dispositif de liaison (12). Le dispositif de liaison (12) comporte une première articulation (14) disposée entre le bâti (6) et le bras de roue (13). Cette première articulation (14) présente un axe sensiblement horizontal et perpendiculaire à la direction d'avance (A) dans la configuration de transport. Lors du travail, l'axe de la première articulation (14) est alors sensiblement vertical et perpendiculaire à la direction d'avance (A). Le dispositif de liaison (12) comporte encore un organe de manoeuvre (15). Cet organe de manoeuvre (15) permet de pivoter la roue de transport (11), d'une position active au transport à une position passive lors du travail et inversement, autour de la première articulation (14).

D'une manière particulièrement avantageuse, le dispositif de liaison (12) comporte un boîtier (16), lequel est lié au bras de roue (13) au moyen d'une deuxième articulation (17) d'axe sensiblement vertical au transport. Cette deuxième articulation (17) permet à la roue de transport (11) de suivre parfaitement le tracteur (5) et d'accompagner les changements de direction du tracteur (5). La roue de transport (11) pivote librement autour de ladite deuxième articulation (17). L'organe de manoeuvre (15) est lié d'une part au bâti (6) via une troisième articulation (18) et d'autre part au boîtier (16) via une quatrième articulation (19). La troisième articulation (18) et la quatrième articulation (19) présentent chacune un axe horizontal et perpendiculaire à la direction d'avance (A) dans la configuration de transport (Fig. 2 et Fig. 4). L'organe de manoeuvre (15) est, de préférence, un actionneur tel qu'un vérin hydraulique du type à double effet. Ce dernier est avantageusement piloté depuis la cabine du tracteur (5). Dans le circuit hydraulique qui pilote le passage de la position de transport à la position de travail, il peut être prévu que la roue de transport (11) passe de sa position active à sa position passive et inversement grâce à l'organe de manoeuvre (15).

En transport, l'arrière-train (3) est orienté de façon à ce que tous les corps de labour (8) sont disposés au- dessus du bâti (6). L'organe de manoeuvre (15) est étendu de sorte que la roue de transport (11) est appuyée au sol. Dans cette position de transport, la roue de régulation (10) n'est pas au sol. La roue de transport (11) pivote autour de la première articulation (14) jusqu'à ce que l'axe de la deuxième articulation (17) soit sensiblement vertical. La barre supérieure du système d'attelage 3 points (4) est désaccouplée pour permettre à la charrue (1) de s'adapter au relief de la route.

Pour éviter au moins partiellement la transmission audit bâti (6) des chocs subis par la roue de transport (11) lors du transport, la charrue (1) est équipée d'un dispositif amortisseur (20). En effet, lors du déplacement de la ferme au champ, la charrue (1) est attelée au tracteur (5) et doit encaisser des chocs engendrés par le passage de la roue de transport (11) sur des chemins relativement accidentés à une vitesse élevée. Avec ce dispositif amortisseur (20), le bâti (6) de la charrue (1) sera donc moins sollicité et subira donc moins les irrégularités du sol. Le dispositif amortisseur (20) est implanté entre le bâti (6) et la roue de transport (11). Le boîtier (16) est lié au bâti (6) au moyen d'une bielle (21). Cette bielle (21) est articulée d'une part sur le boîtier (16) au moyen de la première articulation (14) et d'autre part sur le bâti (6) au moyen d'une cinquième articulation (22). Le dispositif amortisseur (20) comporte un élément élastique (23) monté sur une tige (24). Ladite tige (24) est reliée à la bielle (21) au moyen d'une sixième articulation (25).

Comme représenté à la figure 2 dans la configuration de transport, l'axe de la deuxième articulation (17) est sensiblement vertical, ce qui permet à la roue de transport (11) d'accompagner la trajectoire du tracteur (5). La roue de transport (11) est adaptée pour des vitesses de transport relativement élevées.

Pour passer de la position de transport à la position de travail, l'arrière-train (3) de la charrue (1) pivote d'un quart de tour autour de l'axe de retournement (9A). Dans cette position de travail, la roue de transport (11) n'est pas active. A la lumière des figures 3 et 5, la roue de transport (11) est repliée au moyen de l'organe de manoeuvre (15) autour de la première articulation (14). Au travail, l'organe de manoeuvre (15) est rétracté et l'axe de la deuxième articulation (17) est sensiblement parallèle audit bâti (6). La roue de transport (11) est alors disposée sensiblement dans un plan horizontal. Selon le type de pneu équipant la roue de transport (11), cette dernière s'étend dans l'encombrement en hauteur dudit bâti (6) (Fig. 1). Grâce à la position dans un plan horizontal de la roue de transport (11), la charrue (1) peut passer en dessous de certains obstacles lors du premier passage en début de champ. Cette position dans le plan horizontal contribue à utiliser au mieux toute la surface du champ et donc de labourer au plus près des limites du champ. Lors du travail, le pivotement de la roue de transport (11) autour de la deuxième articulation (17) est bien sûr bloqué. Ce blocage est effectué par exemple avec un verrou ou avec tout autre moyen connu.

A la lumière de la figure 3, on remarque que la roue de transport (11) est alors très proche du bâti (6) dans la configuration de travail. De plus, la roue de transport (11) est disposée dans l'encombrement en largeur de la charrue (1), elle ne déborde pas en largeur. Ainsi, la roue de transport (11) ne limite pas la surface labourée. L'agriculteur pourra effectuer un labour au plus près des limites et donc cultiver au mieux toute la surface de son champ. La roue de transport (11) dans la configuration de travail n'augmente pas la largeur hors tout, ni la longueur hors tout de la charrue (1).

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection.

## Revendications

1. Charrue (1) réversible portée comprenant un avant-train (2) et un arrière-train (3), farrière-train (3) comportant un bâti (6) équipé d'au moins deux corps de labour (8), d'une roue de régulation (10) et d'une roue de transport (11), ladite roue de régulation (10) est disposée à l'arrière du bâti (6), ***caractérisée par le fait* que** ladite roue de transport (11) est disposée latéralement sur ledit bâti (6) de la charrue (1).

2. Charrue selon la revendication 1, ***caractérisée par le fait* que** ladite roue de transport (11) est liée audit bâti au moyen d'un dispositif de liaison (12).

3. Charrue selon la revendication 2, ***caractérisée par le fait* que** ledit dispositif de liaison (12) comporte une première articulation (14) d'axe sensiblement horizontal dans la configuration de transport.

4. Charrue selon la revendication 3, ***caractérisée par le fait* que** ladite roue de transport (11) pivote autour de ladite première articulation (14) au moyen d'un organe de manoeuvre (15) d'une position active de transport à une position passive en travail.

5. Charrue selon l'une quelconque des revendications 1 à 4, ***caractérisée par le fait* que** ladite roue de transport (11) est disposée dans le plan horizontal du bâti (6) dans la configuration de travail.

6. Charrue selon l'une quelconque des revendications 1 à 5, ***caractérisée par le fait* que** ladite roue de transport (11) est disposée dans l'encombrement en largeur de la charrue (1) lors du travail.

7. Charrue selon l'une quelconque des revendications 1 à 6, ***caractérisée par le fait* que** ladite charrue (1) comporte un dispositif amortisseur (20) permettant d'éviter au moins partiellement la transmission audit bâti (6) des chocs subis par la roue de transport (11) lors du transport.

8. Charrue selon la revendication 7, ***caractérisée par le fait* que** le dispositif amortisseur (20) limite le pivotement de la roue de transport (11) autour de ladite cinquième articulation (22) lors du transport.

9. Charrue selon l'une quelconque des revendications 1 à 8, ***caractérisée par le fait* que** la roue de transport (11) pivote autour d'une deuxième articulation (17) et que l'axe de cette deuxième articulation (17) est sensiblement vertical lors du transport.

10. Charrue selon la revendication 9, ***caractérisée par le fait* que** l'axe de ladite deuxième articulation (17) est sensiblement parallèle audit bâti (6) lors du travail.
